# EUROPEAN PATENT APPLICATION

(11) **EP 3 466 845 A1**
(43) Date of publication of application: **10.04.2019**
(21) Application number: 18195974.3
(22) Date of filing: 21.09.2018
(51) Int. Cl.: B65G 47/84, B65G 54/02, B65B 35/40

(54) **A CONTROLLED MOTION SYSTEM AND RELATED METHOD**

(30) Priority: 04.10.2017 EP 17194782
(71) Applicant: Tetra Laval Holdings & Finance S.A., 1009 Pully (CH)
(72) Inventor: Magnusson, Johan, 21214 Malmö (SE); BAKER, Nick, 27194 YSTAD (SE); NILSSON, Patrik, 25463 Helsinborg (SE); WILLANDER, Magnus, 28192 Hässleholm (SE)
(74) Representative: Tetra Pak - Patent Attorneys SE

(57) **Abstract**

A controlled motion system is disclosed comprising a linear track, a plurality of movers being movably mounted on the linear track for moving along a path. At least a first mover and a second mover are connected as a first pair to a guide unit. The guide unit comprises first and second guide tracks movably connected to respective first and second movers, whereby the guide tracks extend with an angle towards a transverse direction, the transverse direction being perpendicular to a longitudinal direction of the path, so that the guide unit is movable in the transverse direction in response to a relative movement between the first mover and the second mover in the longitudinal direction. The guide unit is connected to an article receiving section configured to engage an article for manipulating a position thereof in relation to the path. A related method and packaging machine are also disclosed.

## Description

### Technical Field

The present invention relates to a controlled motion system having a plurality of independently movable movers, and to a method in such controlled motion system, and to a related packaging machine.

### Background

Various systems exist for controlling the motion of e.g. packaging containers when transported along conveyor tracks in a package container production line. Manipulation of the motion trajectories of such packaging containers is associated with several challenges in high-speed production lines where increased through-put is desired. The packaging containers undergo a sequence of operations executed in the production line. The various operations require manipulation of the positions of the packaging containers, such as moving groups of packaging containers from a main flow of packaging containers, in order to direct the groups of packaging containers to different applications, e.g. sealing or wrapping operations. The applications typically need to be executed in parallel for a plurality of groups of package containers to maintain the high throughput of the main flow. It is however difficult to maintain a high throughput without significantly adding to the complexity of the motion control system, with an associated increase on the demands for maintenance, costs, and furthermore less than optimal scalability abilities.

Hence, an improved control motion system would be advantageous and in particular allowing for avoiding more of the above-mentioned problems and compromises, including providing for facilitated manipulation and extraction of package containers from a main flow thereof. A related method and packaging machine would also be advantageous.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a controlled motion system is provided comprising a linear track, a plurality of movers being movably mounted on the linear track for moving along a path, a control unit in communication with the plurality of movers and configured to control individual positions thereof along the path in a longitudinal direction of the path. At least a first mover and a second mover are connected as a first pair to a guide unit. The guide unit comprises first and second guide tracks movably connected to respective first and second movers, whereby the guide tracks extend with an angle towards a transverse direction, the transverse direction being perpendicular to the longitudinal direction, so that the guide unit is movable in the transverse direction in response to a relative movement between the first mover and the second mover in the longitudinal direction. The guide unit is connected to an article receiving section configured to engage an article for manipulating a position thereof in relation to the path.

According to a second aspect a method in a controlled motion system is provided, the system has a linear track and first and second movers being independently movable along a path of the linear track and connected as a first pair to a guide unit. The method comprises moving the first and second movers relative to each other in a longitudinal direction of the path, moving the guide unit in a transverse direction, perpendicular to the longitudinal direction, in response to the relative movement of the first and second movers by moving the guide unit in guide tracks thereof, the guide tracks being movably connected to the first and second movers, and engaging an article with an article receiving section connected to the guide unit to manipulate a position of said article in relation to the path.

According to a third aspect a computer program product comprising instructions which, when the program is executed by a computer, cause the computer to carry out the steps of the method according to the second aspect.

According to a fifth aspect a packaging machine is provided comprising a controlled motion system according to the first aspect, and/or performing the method according to the second aspect.

Further examples of the invention are defined in the dependent claims, wherein features for the second and subsequent aspects of the disclosure are as for the first aspect mutatis mutandis.

Some examples of the disclosure provide for a facilitated manipulation and extraction of package containers from a main flow thereof in a packaging machine.

Some examples of the disclosure provide for a less complex motion controlled system for directing packaging containers to different applications along a production line.

Some examples of the disclosure provide for facilitating parallel execution of applications or operations on groups of packaging containers.

Some examples of the disclosure provide for increased throughput in a production line of packaging containers.

Some examples of the disclosure provide for a production line which is easier to customize to different package containers.

Some examples of the disclosure provide for a more efficient use of resources.

Some examples of the disclosure provide for less time-consuming maintenance in a production line or packaging machine.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1 is a schematic illustration of a controlled motion system according to examples of the disclosure;
Figs. 2a-b are schematic illustrations of a controlled motion system, illustrating different positions of respective guide units thereof, according to examples of the disclosure;
Figs. 3a-b are schematic illustrations of a controlled motion system, illustrating different positions of respective guide units thereof, in a side view looking along the direction of a conveyor track, according to examples of the disclosure;
Figs. 4a-b are schematic illustrations of a controlled motion system, illustrating different positions of respective guide units thereof, in a side view looking along the direction of a conveyor track, according to examples of the disclosure;
Fig. 5 is a schematic illustration of a controlled motion system according to examples of the disclosure;
Fig. 6a is a flowchart of a method in a controlled motion system according to examples of the disclosure; and

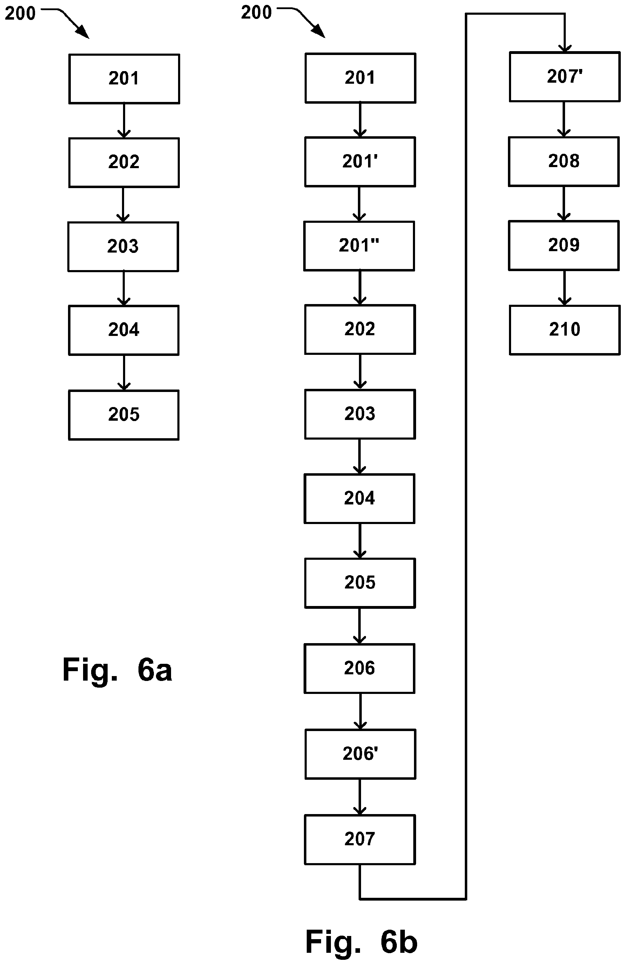

Fig. 6a is another flowchart of a method in a controlled motion system according to examples of the disclosure.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

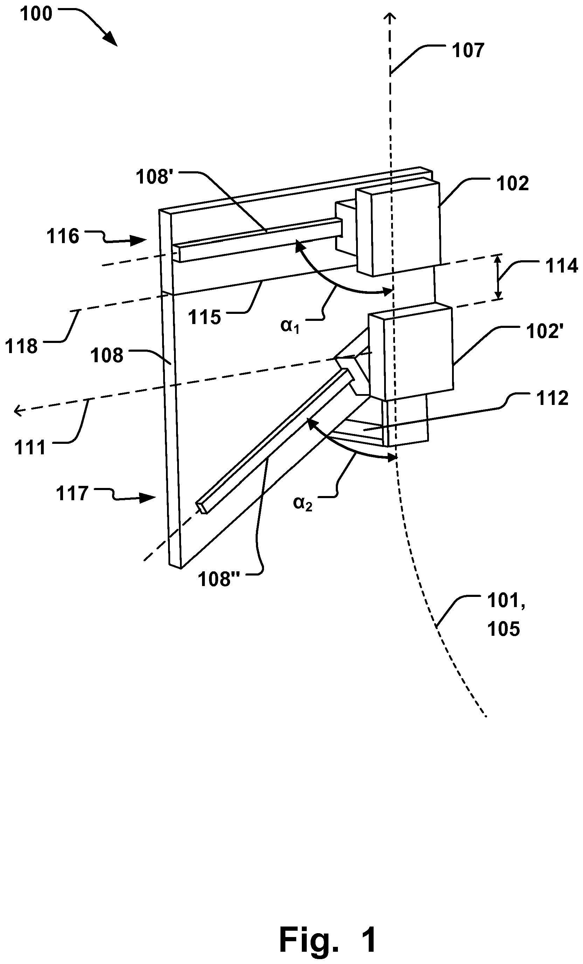

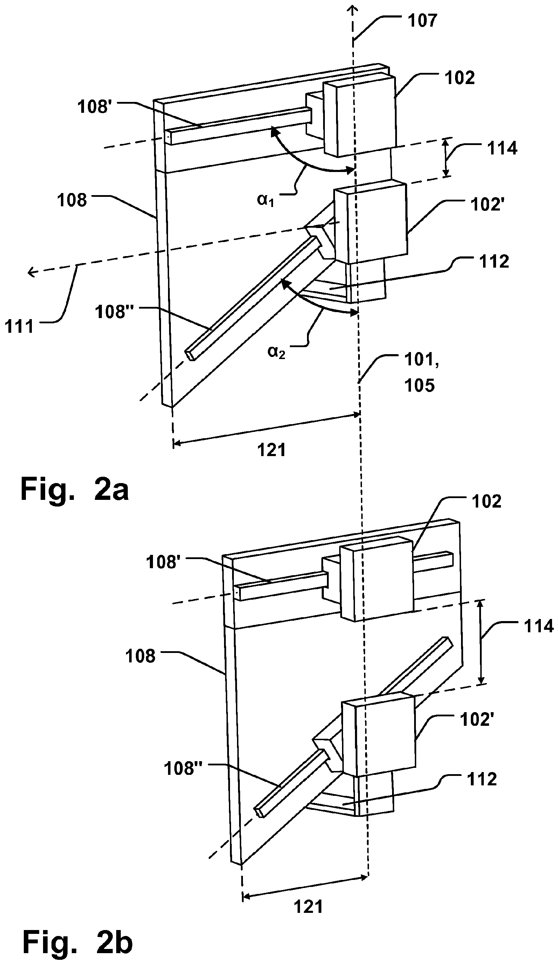

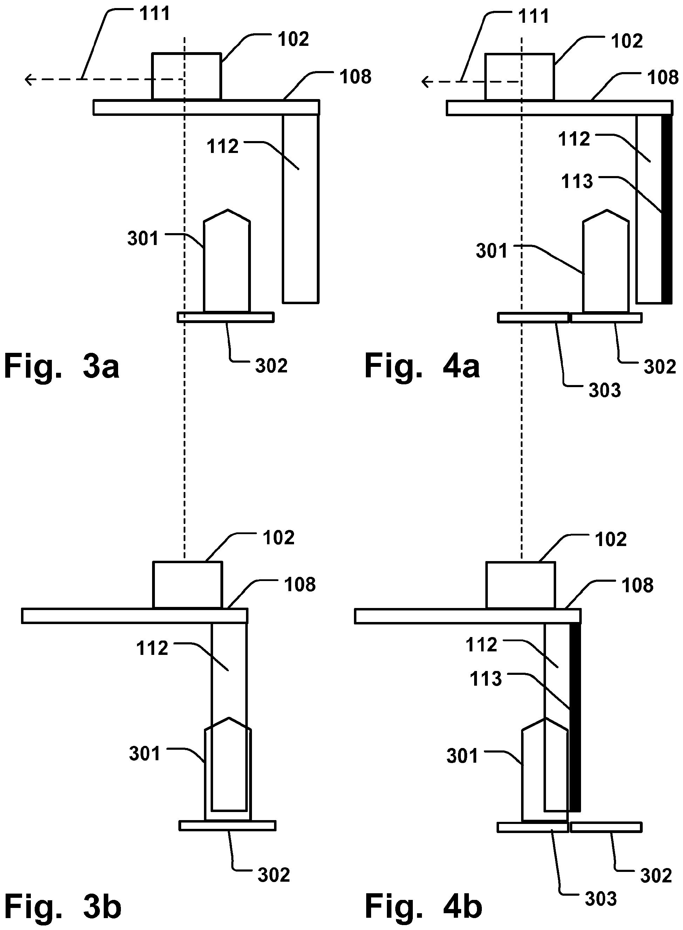

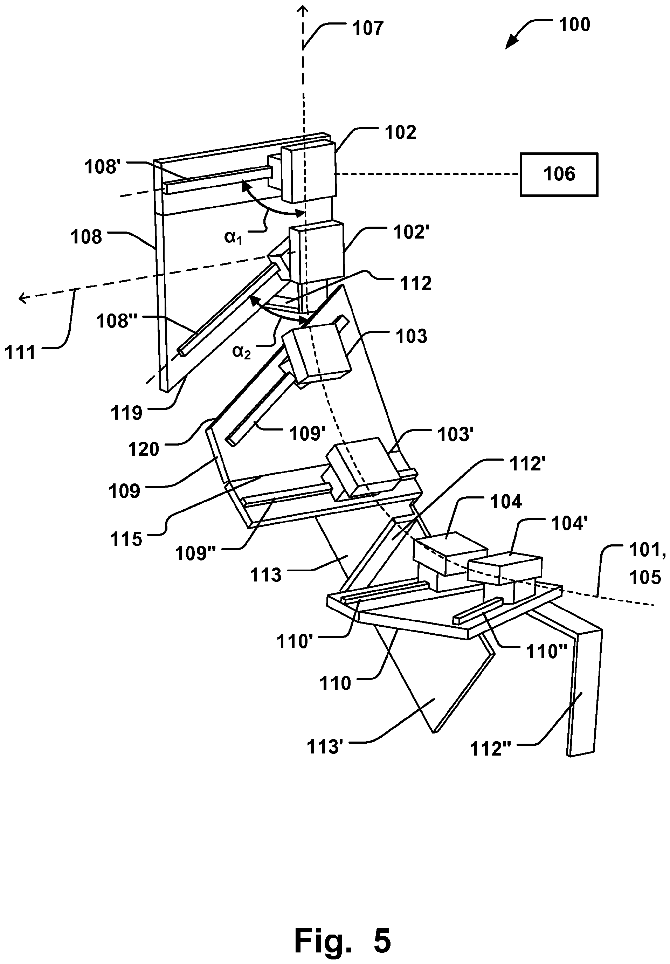

Fig. 5 is a schematic illustration of a controlled motion system 100 comprising a linear track 101 and a plurality of movers 102, 102', 103, 103', 104, 104', (referred to collectively as movers 102-104 below) being movably mounted on the linear track 101 for moving along a path 105. The motion control system 100 comprises a control unit 106 in communication with the movers 102 - 104 and which is configured to control individual positions of the movers 102 - 104 along the path 105 in a longitudinal direction 107 of the path 105. The linear track 101 or path 105 illustrated in Fig. 5 follows a curved shape, and it is to be understood that the path 105 may follow various shapes, and that the path 105 illustrated in Fig. 5 may be only a section of a complete path 105. The complete path 105 may for example comprise an endless loop, such as an oval loop, or any combination of curves that form a continuous endless loop. The control unit 106 is configured to control the individual positions of the movers 102 - 104, independently of each other, and may control the respective motion characteristics thereof such as speed, acceleration etc. The motion of the movers 102 - 104 may be controlled by controlling individual linear motor drive circuits in respective individual sections of the linear track 101. At least a first mover 102, 103, 104, and a second mover 102', 103', 104', are connected as a first pair to a guide unit 108, 109, 110. Fig. 1 is a schematic illustration where e.g. a first mover 102 is connected to a second mover 102' via a guide unit 108. The guide unit 108, 109, 110, comprises first and second guide tracks 108', 108", 109', 109", 110', 110", movably connected to respective first and second movers 102 - 104. I.e. the guide unit 108 in Fig. 1 comprises first and second tracks 108', 108", each movably connected to respective first and second movers 102, 102'. The guide tracks 108', 108", extend with an angle (α₁, α₂) towards a transverse direction 111 (perpendicular to the longitudinal direction 107) so that the guide unit 108 is movable in the transverse direction 111 in response to a relative movement between the first mover 102 and the second mover 102' in the longitudinal direction 107. In the example of Fig. 1, the guide track 108" is angled so that when the mover 102' will convey a force vector component to the direction in which the guide track 108" extends, when the position of the mover 102' is varied in relation to the adjacent mover 102 (e.g. increasing or decreasing the distance 114). This will subsequently produce a force vector component in the transverse direction 111 and induce movement of the guide unit 108 in the transverse direction 111. Figs. 2a-b schematically illustrate such movement, where the distance 114 between the pair of movers 102, 102', is changed, i.e. with an increased distance 114 from Fig. 2a to Fig. 2b, and the resulting variation of a relative length 121 of the guide unit 108 extending beyond the movers 102, 102', arranged at the track 101. The guide unit 108 is connected to an article receiving section 112 (see also article receiving sections 112', 112", 113, 113', in Fig. 5) configured to engage an article 301 for manipulating a position thereof in relation to the path 105. Thus, the article receiving section 112 will move with the guide unit 108, and allow for engaging an article 301 and manipulate the position thereof. Figs. 3a-b and Figs. 4a-b are schematic illustrations showing the guide unit 108 in a side view along the direction of the path 105 and an article 301 being conveyed adjacent and parallel to the path 105 along a conveyor track 302. The article receiving section 112, 113, may thus intersect the conveyor track 302 to manipulate the position of the article 301, as described further below, e.g. to push the article 302 in the transverse direction 111 as seen in Figs. 4a-b. Being able to manipulate articles 302 with a guide unit 108 - 110 that is moving in the transverse direction 111 in relation to the path 105 in response to adjusting individual positions of pairs of movers 102 - 104 connected to the respective guide units 108 - 110 provides for a facilitated, precise and highly customizable positioning of the articles 302. The number of mechanical actuators can be reduced, allowing for a reduced complexity and avoiding associated challenges. E.g. the need for synchronization amongst a plurality of components may be reduced and the speed of the production line can be increased while being more robust. This also provides for less maintenance to the production line. Articles 301, such as packaging containers 301, may be easily manipulated and extracted from a main flow of articles for subsequent manipulation in different downstream applications, and also re-introduced in the main flow of articles, without lowering or disrupting the speed of the main flow and the desired throughput.

Fig. 5 illustrates an example of several cooperating guide units 108 - 110, and associated article receiving section 112, 112', 112", 113, 113', connected to independently positionable movers 102 - 104 for allowing multiple article manipulation operations along the path 105 which may extend along a conveyor track 302. Hence, the plurality of article receiving section 112, 112', 112", 113, 113', may cooperate to e.g. manipulate groups of articles 301 e.g. by moving the articles 301 out from a main conveyor track flow in different configurations and sub-groups.

Movement in the transverse direction 111 as discussed above should be construed as attaining a direction of movement having at least vector component in the transverse direction 111, since it should be understood that the angle (α₁, α₂) of the guide tracks 108', 108", 109', 109", 110', 110", towards a transverse direction 111, may be varied so that the associated guide unit 108 - 110 may move in different directions relative the longitudinal direction 107 when the distance 114 between movers 102 - 104 is varied. Regardless, a flexible and precise manipulation of articles 301 in different orientations is provided by utilizing the independently positionable movers 102 - 104 in a linear track 101. The controlled motion system 100 may thus also be readily implementable in existing linear track applications utilizing independently positionable movers 102 - 104.

A plurality of controlled motion system 100 may be arranged in sequence in a production line and cooperate to provide multiple article manipulation operations in a facilitated manner, while keeping complexity of the line at a minimum. The controlled motion system 100 provides for facilitated scalability of the production line.

The article receiving section may comprise a first engagement surface 112, 112', 112", extending along the transverse direction 111 and being configured to intersect a conveyor track 302, along which the article 301 is conveyed, when the guide unit 108 - 110 moves in the transverse direction 111. The first engagement surface 112, 112', 112", is configured to apply a force on the article 301 in a direction parallel to the longitudinal direction 107. Figs. 3a-b illustrate a first engagement surface 112 being moved into the path of the conveyor track 302. This allows for manipulating e.g. the spacing between a plurality of articles 301, and to create different groups of articles 301, since the first engagement surface 112 may move to intersect the articles 301 at a desired position along the conveyor track 302, whereupon the relative speed between the associated movers 102, 102', connected to the first engagement surface 112, and the conveyor track 302 may be varied. The articles 301 may then be pushed together in groups or separated as desired. Fig. 5 illustrates an example where first engagement surfaces 112, 112', 112", are connected to consecutive guide units 108 - 110, to allow the formation of groups of articles 301, e.g. a first group between 112 and 112', and a second group between 112' and 112". The guide units 108 - 110 are independently movable, thus allowing for independent operation of the associated first engagement surfaces 112, 112', 112". For example, a sequence of manipulation may comprise pushing two of the mentioned groups of articles from the main flow of the conveyor track 302, in the transverse direction 111, by a simultaneous and synchronized transverse movement of guide units 108 - 110. The two groups may be pushed to a second position or track 303, as illustrated in Figs. 4a-b. The second engagement surface 113, 113', will be described further below. Turning to Fig. 5 again, the two groups may then be further separated along the longitudinal direction 107 by continuing pushing the first group arranged between 112 and 112' in the longitudinal direction 107, while the last engagement surface 112" is pulled back in the transverse direction 111, so that the pushing of the second group of articles in the longitudinal direction 107 is stopped. This provides for facilitating subsequent manipulation of the two groups, e.g. in a wrapper application, wrapping the articles 301 together. Fig. 5 is only an example of how first engagement surfaces 112, 112', 112", may be arranged and the positions thereof may be varied depending on the application.

The article receiving section may comprise a second engagement surface 113, 113', being configured to intersect a conveyor track 302, along which the article 301 is conveyed, when the guide element 108 moves in the transverse direction 111. The second engagement surface 113, 113', is configured to apply a force on the article 301 in a direction parallel to the transverse direction 111. Thus, as illustrated in Figs. 4a-b the second engagement surface 113, 113', may push the article or group of articles 301 in the transverse direction 111, as discussed in the example above. The first and second engagement surfaces 112, 112', 112", 113, 113', may hence cooperate to manipulate the trajectory of the articles 301 as desired. Each of the guide units 108 - 110 may be connected to different sets of engagement surfaces 112 - 113. E.g. Fig. 5 shows an example where guide unit 109 is connected an article receiving section comprising both first and second engagement surfaces 112 - 113.

At least one of the first and second guide tracks 108', 108", 109', 109", 110', 110", may have an extension so that a vector component thereof is parallel with said path 105. Considering e.g. guide unit 108 in Fig. 5, the guide track 108" extends with an angle α₂ so that the extension of the guide track 108" has a vector component along the path 105. As elucidated above, this provides for the attaining a relative movement between the guide track 108 and the mover 102' movably connected thereto, when the mover 102' applies a force in the direction of the path 105. The mover 102' may be connected to the guide track 108" via various slidable rail mechanisms. The motion will be transferred to the guide unit 108 since the guide track 108 may be fixated thereto. The second guide track 108' of the mover 108 may also extend in different angles α₂ in order to vary the direction of movement of the guide unit 108 relative the path 105.

The control unit 106 may accordingly be configured to vary a distance 114 between the first 102 - 104 and second 102' - 104' movers in the longitudinal direction 107. The first and second movers may thus be configured exert a force on the respective guide track 108', 108", 109', 109", 110', 110", in the longitudinal direction 107, as the distance 114 is varied, where a vector component of the force is parallel with the extension of at least one of the first and second guide tracks 108', 108", 109', 109", 110', 110".

The guide unit 108 - 110 may comprise at least two sections 116, 117, being joined at a pivotable joint 115, as schematically illustrated in Figs. 1 and 5. The two sections 116, 117, may thus be pivotable relative to each other around an associated rotational axis 118 of the pivotable joint 115, where the rotational axis 118 extends in the transverse direction 111. This provides for the guide unit 108 - 110 to track a curvature of the path e.g. as seen in Fig. 5 with respect to the intermediate guide unit 109 being curved around the pivotable joint 115 when passing a curvature of the path 105. The first and second guide tracks 109', 109", may be arranged on either side of the pivot joint 105.

Again, with reference to Fig. 5, the controlled motion system 100 may comprise (at least) a first pair of movers 102, 102', and second pair of movers 103, 103', connected to respective guide units 108, 109. The guide units 108, 109, may comprise respective article receiving sections 112, 112', 113, 113', being independently movable in the transverse direction 107. This allows for a facilitated and customized manipulation of articles 302, e.g. as explained in the example given above.

The respective guide units 108, 109, may be configured to be aligned towards each other along respective surfaces 119, 120, extending in parallel with at least part of the guide tracks 108', 109', of the respective guide units 108, 109. This provides for a compact arrangement of the controlled motion system 100, e.g. as illustrated in Fig. 5, where surface 119 of guide unit 108 is arranged in parallel with guide track 108", and surface 120 of guide unit 109 is arranged in parallel with guide track 109'. This allows for the associated movers 103, 103', and 102, 102', to be positioned closer together, due to the tapered shape of the guide units 108, 109, in the transverse direction 111.

A first article receiving section 113' of a first guide unit 109 may extend in the longitudinal direction 107 towards a second guide unit 110, where the second guide unit 110 is movable so that a position thereof along said path 105 overlaps with the position of the first article receiving section 113' along the path 105. In the example of Fig. 5, the article receiving section 113' of the guide unit 109 extend in the longitudinal direction 107 (i.e. having a second engagement surface 113' extending in the longitudinal direction 107) towards the guide unit 110 which is able to move past the article receiving section 113' to attain the mentioned overlapping position. This facilitates positioning of an article receiving section 112" of the second guide unit 110 directly adjacent the first article receiving section 113'. This provides for improved cooperation between e.g. the first engagement surface 112" extending in the transverse direction 111 and the second engagement surface 113' extending in the longitudinal direction 107. This allows for a flexible manipulation of an article or group of articles 301. For example, the first engagement surface 112" may be inserted between two articles 301 and create a gap therebetween, e.g. to push a group of articles 301 together between surfaces 112' and 112" (which are independently movable in the longitudinal direction 107 by being connected to different guide units 109, 110) while the second engagement surface 113' simultaneously move in the transverse direction 111 to push the group of articles 301 to a second position 303 (Fig. 4a). The second engagement surface 113' may be positioned to extend between 112' 112", as to facilitate applying a uniform transversal force on all articles 301 of the group.

Fig. 6a illustrates a flow chart of a method 200 in a controlled motion system. The order in which the steps of the method 200 are described and illustrated should not be construed as limiting and it is conceivable that the steps can be performed in varying order. A method 200 in a controlled motion system is thus provided. The system has a linear track 101 and first 102, 103, 104, and second 102', 103', 104', movers being independently movable along a path 105 of the linear track 101 and connected as a first pair to a guide unit 108, 109, 110. The method 200 comprises moving 201 the first and second movers 102 - 104 relative to each other in a longitudinal direction 107 of the path 105. The method 200 comprises moving 202 the guide unit 108 - 110 in a transverse direction 111, perpendicular to the longitudinal direction 107, in response to the relative movement of the first and second movers 102 - 104 by moving 203 the guide unit 108 - 110 in guide tracks 108', 108", 109', 109", 110', 110", thereof. The mentioned guide tracks are movably connected to the first and second movers 102 - 104. The method 200 comprises engaging 204 an article 301 with an article receiving section 112, 112', 112", 113, 113', connected to the guide unit 108 - 110 to manipulate 205 a position of said article 301 in relation to the path 105. The method 200 thus provides for the advantageous benefits as described above in relation to the controlled motion system 100 and Figs. 1 - 5.

Fig. 6b illustrates a further flow chart of a method 200 in a controlled motion system. The order in which the steps of the method 200 are described and illustrated should not be construed as limiting and it is conceivable that the steps can be performed in varying order. Manipulating the article 301 may comprise intersecting 206 a conveyor track 302, along which the article 301 is conveyed, with a first engagement surface 112, 112', 112", of the article receiving section when moving the guide unit 108 - 110 in the transverse direction 111, and applying 207 a force on the article 301 in a direction parallel to the longitudinal direction 107 with the first engagement surface 112, 112', 112".

Manipulating the article 301 may comprise intersecting 206' a conveyor track 302, along which the article 301 is conveyed, with a second engagement surface 113, 113", of the article receiving section when moving the guide unit 108 - 110 in the transverse direction 111, and applying 207' a force on the article 301 in a direction parallel to the transverse direction 111 with the second engagement surface 113, 113".

The method 200 may comprise separating 208 the article 301 from a flow of articles by moving 209 the article 301 from a first conveyor track 302 in the transverse direction 111 by pushing the article 302 with the second engagement surface 113, 113', in the transverse direction 111, and moving 210 the article 301 in a direction parallel with the path 105 by pushing the article 301 with the first engagement surface 112, 112', 112", in the longitudinal direction 107. Hence, as explained above, improved manipulation of an article or group of articles 301 is provided, allowing for facilitated separation from a main flow and subsequent grouping and further separation thereof, by utilizing the independently positionable movers 102 - 104 connected to respective guide units 108 - 110.

The first and second engagement surfaces 112, 112', 112", 113, 113', may be connected to respective guide units 108, 109, 110, whereby the respective guide units 108, 109, 110, are independently moved in the transverse direction 111 by being connected to respective pairs of movers, i.e. movers 102, 102', and/or movers 103, 103', and/or movers 104, 104'.

The method 200 may comprise exerting 201' a force on the guide tracks 108', 108", 109', 109", 110', 110", in the longitudinal direction 107 via the movers by varying 201" a distance 114 therebetween in the longitudinal direction 107, so that a vector component of the force is parallel with the extension of at least one of the guide tracks 108', 108", 109', 109", 110', 110". E.g. with reference to Figs. 2a-b, the distance 114 between the pair of movers 102, 102' may be increased to apply a force with a vector component extending parallel with the guide track 108", as further explained above.

A computer program product is provided comprising instructions which, when the program is executed by a computer, cause the computer to carry out the steps of the method 200 as described above in relation to Figs. 6a-b.

A packaging machine is provided comprising a controlled motion system 100 as described above in relation to Figs. 1 - 5. The packaging machine may perform the method 200 as described above in relation to Figs. 6a-b. The packaging machine thus provides for the advantageous benefits as described above for the controlled motion system 100 and/or the method 200.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A controlled motion system (100), comprising
a linear track (101),
a plurality of movers (102, 102', 103, 103', 104, 104') being movably mounted on the linear track for moving along a path (105),
a control unit (106) in communication with the plurality of movers and configured to control individual positions thereof along the path in a longitudinal direction (107) of the path,
wherein at least a first mover (102, 103, 104) and a second mover (102', 103', 104') are connected as a first pair to a guide unit (108, 109, 110), wherein the guide unit comprises first and second guide tracks (108', 108", 109', 109", 110', 110") movably connected to respective first and second movers, whereby the guide tracks extend with an angle (α₁, α₂) towards a transverse direction (111), the transverse direction being perpendicular to the longitudinal direction, so that the guide unit is movable in the transverse direction in response to a relative movement between the first mover and the second mover in the longitudinal direction,
wherein the guide unit is connected to an article receiving section (112, 112', 112", 113, 113') configured to engage an article (301) for manipulating a position thereof in relation to the path.

2. Controlled motion system according to claim 1, wherein the article receiving section comprises a first engagement surface (112, 112', 112") extending along the transverse direction and being configured to intersect a conveyor track (302), along which the article is conveyed, when the guide unit moves in the transverse direction, whereby the first engagement surface is configured to apply a force on the article in a direction parallel to the longitudinal direction.

3. Controlled motion system according to claim 1 or 2, wherein the article receiving section comprises a second engagement surface (113, 113') being configured to intersect a conveyor track (302), along which the article is conveyed, when the guide element moves in the transverse direction, whereby the second engagement surface is configured to apply a force on the article in a direction parallel to the transverse direction.

4. Controlled motion system according to any of claims 1 - 3, wherein at least one of the first and second guide tracks has an extension so that a vector component thereof is parallel with said path.

5. Controlled motion system according to any of claims 1 - 4, wherein the control unit is configured to vary a distance (114) between the first and second movers in the longitudinal direction, wherein the first and second movers are configured exert a force on the respective guide track in the longitudinal direction, as said distance is varied, whereby a vector component of the force is parallel with the extension of at least one of the first and second guide tracks.

6. Controlled motion system according to any of claims 1 - 5, wherein the guide unit comprises at least two sections (116, 117) being joined at a pivotable joint (115), whereby the two sections are pivotable relative to each other around an associated rotational axis (118) of the pivotable joint extending in the transverse direction.

7. Controlled motion system according to any of claims 1 - 6, comprising a first pair of movers (102, 102') and second pair of movers (103, 103'), connected to respective guide units (108, 109) each comprising a respective article receiving section (112, 112', 113, 113') being independently movable in the transverse direction.

8. Controlled motion system according to claim 7, wherein said respective guide units are configured to be aligned towards each other along respective surfaces (119, 120) extending in parallel with at least part of the guide tracks of the respective guide units.

9. Controlled motion system according to claim 7 or 8, wherein a first article receiving section (113') of a first guide unit (109) extends in the longitudinal direction towards a second guide unit (110), whereby the second guide unit is movable so that a position thereof along said path overlaps with the position of the first article receiving section along the path.

10. A method (200) in a controlled motion system having a linear track (101) and first (102, 103, 104) and second (102', 103', 104') movers being independently movable along a path (105) of the linear track and connected as a first pair to a guide unit (108, 109, 110), the method comprising
moving (201) the first and second movers relative to each other in a longitudinal direction (107) of the path,
moving (202) the guide unit in a transverse direction (111), perpendicular to the longitudinal direction, in response to the relative movement of the first and second movers by moving (203) the guide unit in guide tracks (108', 108", 109', 109", 110', 110") thereof, the guide tracks being movably connected to the first and second movers, and
engaging (204) an article (301) with an article receiving section (112, 112', 112", 113, 113') connected to the guide unit to manipulate (205) a position of said article in relation to the path.

11. Method according to claim 10, wherein manipulating said article comprises intersecting (206) a conveyor track, along which the article is conveyed, with a first engagement surface (112, 112', 112") of the article receiving section when moving the guide unit in the transverse direction, and
applying (207) a force on the article in a direction parallel to the longitudinal direction with the first engagement surface.

12. Method according to claim 10 or 11, wherein manipulating said article comprises intersecting (206') a conveyor track, along which the article is conveyed, with a second engagement surface (113, 113") of the article receiving section when moving the guide unit in the transverse direction, and
applying (207') a force on the article in a direction parallel to the transverse direction with the second engagement surface.

13. Method according to claims 11 and 12, comprising
separating (208) said article from a flow of articles by moving (209) said article from a first conveyor track (302) in the transverse direction by pushing the article with the second engagement surface in the transverse direction, and
moving (210) the article in a direction parallel with the path by pushing the article with the first engagement surface in the longitudinal direction.

14. Method according to claim 13, wherein the first and second engagement surfaces are connected to respective guide units (108, 109, 110) whereby the respective guide units are independently moved in the transverse direction by being connected to respective pairs of movers (102, 102', 103, 103', 104, 104').

15. Method according to any of claims 10 - 14, comprising
exerting (201') a force on the guide tracks in the longitudinal direction via the respective pairs of movers by varying (201") a distance (114) between the respective pairs of movers in the longitudinal direction, whereby a vector component of the force is parallel with the extension of at least one of the guide tracks.

16. A computer program product comprising instructions which, when the program is executed by a computer, cause the computer to carry out the steps of the method according to any of claims 10 - 15.

17. A packaging machine comprising a controlled motion system (100) according to any of claims 1 - 9, and/or performing the method (200) according any of claims 10 - 15.
